# EUROPEAN PATENT APPLICATION

(11) **EP 4 535 844 A1**
(43) Date of publication of application: **09.04.2025**
(21) Application number: 23830099.0
(22) Date of filing: 21.06.2023
(51) Int. Cl.: H04W 8/24, H04W 72/12, H04L 5/00

(54) **COMMUNICATION METHOD AND APPARATUS**

(30) Priority: 30.06.2022 CN 202210770926
(71) Applicant: Huawei Technologies Co., Ltd., Shenzhen, Guangdong 518129 (CN)
(72) Inventor: HAN, Xiaojiang, Shenzhen, Guangdong 518129 (CN); ZHANG, Jiayin, Shenzhen, Guangdong 518129 (CN); CHEN, Liang, Shenzhen, Guangdong 518129 (CN); CHEN, Qucai, Shenzhen, Guangdong 518129 (CN)
(74) Representative: Pfenning, Meinig & Partner mbB
(86) International application number: PCT/CN2023/101887
(87) International publication number: WO 2024/001920

(57) **Abstract**

This application relates to a communication method and apparatus. A network device receives first information from a terminal device, where the first information indicates a transmission capability of the terminal device. The network device determines, based on the first information, scheduling information supported by the terminal device, where the scheduling information includes a maximum quantity of data blocks and/or a maximum quantity of bits that can be transmitted in a single time domain unit. The network device schedules the terminal device based on the scheduling information. The network device can learn of an actual transmission capability of the terminal device, and therefore can determine a scheduling policy based on the actual transmission capability of the terminal device. This improves scheduling flexibility, so that scheduling of the terminal device can reduce resource overheads, and ensure an access success rate of the terminal device.

## Description

### CROSS-REFERENCE TO RELATED APPLICATIONS

This application claims priority to Chinese Patent Application No. 202210770926.3, filed with the China National Intellectual Property Administration on June 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A non-terrestrial network (non-terrestrial network, NTN) technology extends an application field of a cellular communication technology, can support both terrestrial communication and space communication via non-terrestrial network devices such as satellites, and provides technical possibilities for space-air-ground-sea integrated communication.

However, in the NTN communication technology, because a height difference between the non-terrestrial network device and the ground is large, link attenuation is huge when the non-terrestrial network device communicates with a terminal device on the ground. Consequently, quality of receiving a signal from the non-terrestrial network device by the terminal device is poor. To improve a success rate of demodulating the received signal by the terminal device, only a quantity of valid bits (bits) carried in each time domain unit such as a transmission time interval (transmission time interval, TTI) can be reduced. A poorer capability of the terminal device indicates a smaller quantity of valid bits carried in each time domain unit.

Currently, during design of a communication system, compatibility design is performed based on a worst terminal device capability. In this case, during communication between devices (for example, a network device and a terminal device) in the communication system, the network device schedules a terminal device based on the worst terminal device capability. For example, in an NTN system, when scheduling a terminal device, the network device can transmit only an excessively small quantity of bits in one time domain unit based on the worst terminal device capability, and therefore transmission of to-be-transmitted information can be completed by using a plurality of time domain units, resulting in high resource overheads.

### SUMMARY

Embodiments of this application provide a communication method and apparatus, to reduce resource overheads.

According to a first aspect, a communication method is provided. The method may be performed by a network device, may be performed by another device including a function of the network device, or may be performed by a chip system or another functional module. The chip system or the functional module can implement the function of the network device. For example, the chip system or the functional module is disposed in the network device. Optionally, for example, the network device is located on the ground (in other words, the network device is a terrestrial network device). For example, the network device is a terrestrial base station. Alternatively, the network device is, for example, a non-terrestrial network device, for example, a satellite. Alternatively, the network device includes, for example, a non-terrestrial network device and a terrestrial network device. The method includes: receiving first information from a terminal device, where the first information indicates a transmission capability of the terminal device; determining, based on the first information, scheduling information supported by the terminal device, where the scheduling information includes a maximum quantity of data blocks and/or a maximum quantity of bits that can be transmitted in a single time domain unit; and scheduling the terminal device based on the scheduling information.

In this embodiment of this application, the terminal device may indicate the transmission capability of the terminal device to the network device by using the first information, so that the network device can determine, based on the transmission capability of the terminal device, the scheduling information supported by the terminal device, in other words, the network device can schedule the terminal device with reference to the actual transmission capability of the terminal device. For example, the network device may accurately determine, based on the actual transmission capability of the terminal device, a maximum quantity of data blocks and/or a maximum quantity of bits supported by the terminal device in a single time domain unit. In this way, the network device does not need to schedule, according to a unified scheduling policy, uplink or downlink information transmission for various terminal devices. This improves flexibility of a scheduling process, so that scheduling of the terminal device can reduce resource overheads, and ensure an access success rate of the terminal device. In addition, the network device does not need to schedule the terminal device based on a worst terminal device capability. If the actual transmission capability of the terminal device is better than the worst terminal device capability, the network device may determine that the maximum quantity of data blocks and/or the maximum quantity of bits supported by the terminal device in a single time domain unit may be greater than a maximum quantity of data blocks and/or a maximum quantity of bits supported by a terminal device corresponding to the worst terminal device capability in a single time domain unit, so that the resource overheads can be reduced.

In an optional implementation, the terminal device accesses the network device via a non-terrestrial network device, or the network device is a non-terrestrial network device. For example, the network device is a terrestrial network device, and the terminal device may access the network device via a non-terrestrial network device (for example, a satellite). For another example, the network device is a non-terrestrial network device, and the terminal device may directly access the network device.

In an optional implementation, the first information includes one or more of the following: equivalent isotropic radiated power (effective isotropic radiated power, EIRP) of the terminal device, maximum transmit power information and/or transmit antenna gain information of the terminal device, first capability level information, or type information of the terminal device. The first capability level information indicates a capability level to which a transmit capability of the terminal device belongs. Optionally, if the first information indicates an uplink transmission capability of the terminal device, the network device may determine, based on the first information, uplink scheduling information supported by the terminal device. If the first information indicates a downlink transmission capability of the terminal device, the network device may determine, based on the first information, downlink scheduling information supported by the terminal device. For example, the foregoing first information indicates the uplink transmission capability of the terminal device, and the network device may determine the uplink scheduling information of the terminal device based on the first information. For example, the EIRP of the terminal device may indicate the maximum transmit power information and/or the transmit antenna gain information of the terminal device, so that the network device can obtain more parameter information (for example, parameter information such as the maximum transmit power information and/or the transmit antenna gain information) by using the EIRP. This reduces a reporting amount and reduces signaling overheads. The first capability level information indicates the capability level to which the transmit capability of the terminal device belongs, so that the network device can determine the transmit capability of the terminal device based on the first capability level information. In comparison to directly reporting the transmit capability, reporting the first capability level information helps reduce the signaling overheads. A type of the terminal device may also indirectly indicate a capability of the terminal device, so that the network device can also determine the capability of the terminal device based on the type information of the terminal device. This indication manner is simple, and helps reduce the signaling overheads. However, if the maximum transmit power information and/or the transmit antenna gain information of the terminal device are/is indicated, the network device may directly determine these parameters based on reporting of the terminal device. In this way, implementation is simple for the network device.

In an optional implementation, the first information is included in a radio resource control (radio resource control, RRC) message; or the first information is included in a media access control (media access control, MAC) control element (control element, CE); or the first information is included in a third message (Msg3) in a random access process. For example, the RRC message is used to report capability information of the terminal device. This is equivalent to reporting the first information together with other capability information of the terminal device, and the network device can obtain various capability information of the terminal device by using one message. Alternatively, a message may be newly added to carry the first information. For example, the MAC CE or another message is newly added, so that the reporting of the first information does not affect a format of another existing message. Alternatively, the Msg3 may be used to report the first information, so that the network device can obtain the first information more quickly.

In an optional implementation, the scheduling information includes the uplink scheduling information, and the determining, based on the first information, scheduling information supported by the terminal device includes: determining first received signal strength based on the first information, where the first received signal strength is received signal strength of the network device for information from the terminal device; determining a first modulation and coding scheme (modulation and coding scheme, MCS) based on the first received signal strength; and determining the uplink scheduling information according to the first MCS. The uplink scheduling information includes a maximum quantity of data blocks and/or a maximum quantity of bits that can be transmitted in an uplink in a single time domain unit. Therefore, the network device can quickly and accurately determine the uplink scheduling information.

In an optional implementation, the first information further includes receive antenna gain information and/or received noise information of the terminal device; or the first information further includes second capability level information, where the second capability level information indicates a capability level to which a receiving capability of the terminal device belongs. In this implementation, the first information indicates the downlink transmission capability of the terminal device, so that the network device may determine, based on the first information, the downlink scheduling information supported by the terminal device. If the terminal device reports the second capability level information, the signaling overheads can be reduced. If the terminal device reports the receive antenna gain information and/or the received noise information of the terminal device, an information processing amount of the network device can be reduced, and efficiency of scheduling the terminal device can be improved.

In an optional implementation, the first information may indicate the uplink transmission capability and/or the downlink transmission capability of the terminal device, or the uplink transmission capability and the downlink transmission capability of the terminal device may be separately indicated by using different information.

In an optional implementation, the scheduling information includes the downlink scheduling information, and the determining, based on the first information, scheduling information supported by the terminal device includes: determining second received signal strength based on the first information, where the second received signal strength is received signal strength of the terminal device for information from the network device; determining a second MCS based on the second received signal strength; and determining the downlink scheduling information according to the second MCS. The downlink scheduling information includes a maximum quantity of data blocks and/or a maximum quantity of bits that can be transmitted in a downlink in a single time domain unit. Therefore, the network device can quickly and accurately determine the downlink scheduling information.

In an optional implementation, the first information is information corresponding to a terminal device of a first type, where a transmission capability of the terminal device of the first type is a first transmission capability. The network device may determine the type of the terminal device based on the first information, so that the network device can determine the transmission capability of the terminal device based on the type of the terminal device, and the first information does not need to carry other information for indication. This helps reduce the signaling overheads. The first information may be a random access preamble. The random access preamble is used as the first information, so that the network device can obtain the first information more quickly (in other words, earlier). In addition, because a format of the random access preamble is simple and an information amount is small, efficiency of parsing the random access preamble by the network device is high, so that the network device can also obtain the first information quickly.

According to a second aspect, a communication method is provided. The method may be performed by a network device. For descriptions of the network device, refer to the first aspect. The method includes: receiving second information from a terminal device, where transmit power of the second information is predetermined transmit power; determining, based on the second information, uplink scheduling information supported by the terminal device, where the uplink scheduling information includes a maximum quantity of data blocks and/or a maximum quantity of bits that can be transmitted in an uplink in a single time domain unit; and scheduling the terminal device based on the uplink scheduling information.

In this embodiment of this application, the terminal device does not need to indicate a transmission capability of the terminal device to the network device, but sends the second information to the network device based on the predetermined transmit power. The network device may also determine the transmission capability of the terminal device based on the second information, to determine the uplink scheduling information of the terminal device. According to the technical solution in this embodiment of this application, the network device may determine, based on the actual transmission capability that is of the terminal device and that is determined by using the second information, a maximum quantity of data blocks and/or a maximum quantity of bits supported by the terminal device in a single time domain unit. In this way, the network device does not need to schedule, according to a unified scheduling policy, uplink transmission for various terminal devices, so that flexible scheduling of the terminal device can be implemented. In this way, the scheduling of the terminal device can reduce resource overheads, and ensure an access success rate of the terminal device. In addition, the network device does not need to schedule the terminal device based on a worst terminal device capability. If the actual transmission capability of the terminal device is better than the worst terminal device capability, the network device may determine that the maximum quantity of data blocks and/or the maximum quantity of bits supported by the terminal device in a single time domain unit may be greater than a maximum quantity of data blocks and/or a maximum quantity of bits supported by a terminal device corresponding to the worst terminal device capability in a single time domain unit, so that the resource overheads can be reduced. In addition, in this embodiment of this application, the terminal device does not need to send corresponding information to the network device to notify the network device of the transmission capability of the terminal device. This reduces a reporting amount of the terminal device and reduces the resource overheads.

In an optional implementation, the predetermined transmit power is maximum transmit power of the terminal device. The terminal device sends the second information by using the maximum transmit power. In this way, the network device can learn of a maximum transmission capability of the terminal device, so that the network device can schedule the terminal device more accurately.

In an optional implementation, the terminal device accesses the network device via a non-terrestrial network device, or the network device is a non-terrestrial network device.

In an optional implementation, the second information is a random access preamble, a Msg3 in a random access process, a fifth message (Msg5) in a random access process, or information carried on a physical uplink shared channel (physical uplink shared channel, PUSCH). Alternatively, the second information may be other uplink information. This is not specifically limited.

In an optional implementation, the method further includes: sending third information, where the third information indicates the terminal device to send the second information based on the predetermined transmit power. A type of the second information may be preset, for example, predefined in a protocol, determined by the terminal device and the network device through negotiation, or indicated by the network device. For example, the network device may indicate the type of the second information by using the third information. This manner is flexible.

In an optional implementation, the third information is system information, a random access response message, or information carried on a physical downlink control channel (physical downlink control channel, PDCCH). An implementation of the third information is not limited either.

In an optional implementation, the determining, based on the second information, uplink scheduling information supported by the terminal device includes: determining received signal strength of the network device for the second information; determining an MCS based on the received signal strength; and determining the uplink scheduling information according to the MCS. A manner of determining the uplink scheduling information by the network device is provided. In addition, the network device may alternatively determine the uplink scheduling information in another manner.

According to a third aspect, a communication method is provided. The method may be performed by a terminal device, may be performed by another device including a function of the terminal device, or may be performed by a chip system or another functional module. The chip system or the functional module can implement the function of the terminal device. For example, the chip system or the functional module is disposed in the terminal device. The method includes: determining a transmission capability of the terminal device; and sending first information to a network device, where the first information indicates the transmission capability of the terminal device.

In an optional implementation, the first information includes one or more of the following: EIRP of the terminal device, maximum transmit power information and/or transmit antenna gain information of the terminal device, first capability level information, or type information of the terminal device. The first capability level information indicates a capability level to which a transmit capability of the terminal device belongs.

In an optional implementation, the first information is included in an RRC message; or the first information is included in a MAC CE; or the first information is included in a Msg3 in a random access process.

In an optional implementation, the RRC message is a message used to carry capability information of the terminal device.

In an optional implementation, the first information further includes receive antenna gain information and/or received noise information of the terminal device; or the first information further includes second capability level information, where the second capability level information indicates a capability level to which a receiving capability of the terminal device belongs.

In an optional implementation, the first information is information corresponding to a terminal device of a first type, where a transmission capability of the terminal device of the first type is a first transmission capability.

In an optional implementation, the first information is a random access preamble.

For technical effects brought by the third aspect or the optional implementations, refer to descriptions of technical effects of the first aspect or the corresponding implementations.

According to a fourth aspect, a communication method is provided. The method may be performed by a terminal device, may be performed by another device including a function of the terminal device, or may be performed by a chip system or another functional module. The chip system or the functional module can implement the function of the terminal device. For example, the chip system or the functional module is disposed in the terminal device. The method includes: sending second information to a network device at predetermined transmit power, where the second information is used to determine uplink scheduling information supported by the terminal device. The uplink scheduling information includes a maximum quantity of data blocks and/or a maximum quantity of bits that can be transmitted in an uplink in a single time domain unit.

In an optional implementation, the predetermined transmit power is maximum transmit power of the terminal device.

In an optional implementation, the terminal device accesses the network device via a non-terrestrial network device, or the terminal device is a non-terrestrial network device.

In an optional implementation, the second information is a random access preamble, a Msg3 in a random access process, a Msg5 in a random access process, or information carried on a PUSCH.

In an optional implementation, the method further includes: receiving third information from the network device, where the third information indicates the terminal device to send the second information based on the predetermined transmit power.

In an optional implementation, the third information is system information, a random access response message, or information carried on a PDCCH.

For technical effects brought by the fourth aspect or the optional implementations, refer to descriptions of technical effects of the second aspect or the corresponding implementations.

According to a fifth aspect, a communication apparatus is provided. The communication apparatus may be the network device according to the first aspect and/or the second aspect, a communication device including the network device, or a functional module in the network device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

The transceiver unit (or the receiving unit) is configured to receive first information from a terminal device, where the first information indicates a transmission capability of the terminal device. The processing unit is configured to determine, based on the first information, scheduling information supported by the terminal device, where the scheduling information includes a maximum quantity of data blocks and/or a maximum quantity of bits that can be transmitted in a single time domain unit. The processing unit is further configured to schedule the terminal device based on the scheduling information.

Alternatively, the transceiver unit (or the receiving unit) is configured to receive second information from a terminal device, where transmit power of the second information is predetermined transmit power. The processing unit is configured to determine, based on the second information, uplink scheduling information supported by the terminal device, where the uplink scheduling information includes a maximum quantity of data blocks and/or a maximum quantity of bits that can be transmitted in an uplink in a single time domain unit. The processing unit is further configured to schedule the terminal device based on the uplink scheduling information.

In an optional implementation, the communication apparatus further includes a storage unit (sometimes also referred to as a storage module), and the processing unit is configured to be coupled to the storage unit, and execute a program or instructions in the storage unit, to enable the communication apparatus to perform the function of the network device according to the first aspect and/or the second aspect.

According to a sixth aspect, another communication apparatus is provided. The communication apparatus may be the terminal device according to the third aspect and/or the fourth aspect, a communication device including the terminal device, or a functional module in the terminal device, for example, a baseband apparatus or a chip system. The communication apparatus includes a processing unit (sometimes also referred to as a processing module) and a transceiver unit (sometimes also referred to as a transceiver module). For descriptions of the transceiver unit, refer to the fifth aspect.

The processing unit is configured to determine a transmission capability of the terminal device. The transceiver unit (or a sending unit) is configured to send first information to a network device, where the first information indicates the transmission capability of the terminal device.

Alternatively, the transceiver unit (or a sending unit) is configured to send second information to a network device at predetermined transmit power, where the second information is used to determine uplink scheduling information supported by the terminal device. The uplink scheduling information includes a maximum quantity of data blocks and/or a maximum quantity of bits that can be transmitted in an uplink in a single time domain unit.

In an optional implementation, the communication apparatus further includes a storage unit (sometimes also referred to as a storage module), and the processing unit is configured to be coupled to the storage unit, and execute a program or instructions in the storage unit, to enable the communication apparatus to perform the function of the terminal device according to the third aspect and/or the fourth aspect.

According to a seventh aspect, a communication apparatus is provided. The communication apparatus may be a network device, or a chip or a chip system used in the network device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the network device in the foregoing aspects.

According to an eighth aspect, a communication apparatus is provided. The communication apparatus may be a terminal device, or a chip or a chip system used in the terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the terminal device in the foregoing aspects.

According to a ninth aspect, a communication system is provided, and includes a terminal device and a network device. The terminal device is configured to perform the communication method according to the third aspect and/or the fourth aspect, and the network device is configured to perform the communication method according to the first aspect and/or the second aspect.

According to a tenth aspect, a computer-readable storage medium is provided. The computer-readable storage medium is configured to store a computer program or instructions. When the computer program or the instructions are run, the method performed by the network device or the terminal device in the foregoing aspects is implemented.

According to an eleventh aspect, a computer program product including instructions is provided. When the computer program product runs on a computer, the methods according to the foregoing aspects are implemented.

According to a twelfth aspect, a chip system is provided, and includes a processor and an interface. The processor is configured to invoke instructions from the interface and run the instructions, so that the chip system implements the methods according to the foregoing aspects.

### BRIEF DESCRIPTION OF DRAWINGS

FIG. 1 is a diagram of an architecture of an NTN system (transparent transmission mode) according to an embodiment of this application;
FIG. 2 is a diagram of an architecture of an NTN system (regenerative mode) according to an embodiment of this application;
FIG. 3 is a diagram of an architecture of an NTN system (having an ISL) according to an embodiment of this application;
FIG. 4 is a diagram of an architecture of an NTN system (a network device includes a DU and a CU) according to an embodiment of this application;
FIG. 5 is a diagram of a base station of a CU-DU split architecture;
FIG. 6 is a flowchart of a communication method according to an embodiment of this application;
FIG. 7 is a flowchart of accessing a network by a UE according to an embodiment of this application;
FIG. 8 is a flowchart of another communication method according to an embodiment of this application;
FIG. 9 is a diagram of an apparatus according to an embodiment of this application; and
FIG. 10 is a diagram of another apparatus according to an embodiment of this application.

### DESCRIPTION OF EMBODIMENTS

The technical solutions provided in embodiments of this application may be applied to a long term evolution (long term evolution, LTE) system, a new radio (new radio, NR) communication system, an NTN system, vehicle to everything (vehicle to everything, V2X), an internet of vehicles, machine type communication (machine type communication, MTC), an internet of things (internet of things, IoT), machine to machine (machine to machine, M2M), or a future mobile communication system like a 6th generation (6th generation, 6G) system.

In a possible application scenario, the NTN system may include a satellite system. Based on satellite altitudes, namely, satellite orbital heights, satellites may be classified into a highly elliptical orbit (highly elliptical orbit, HEO) satellite, a geostationary earth orbit (geostationary earth orbit, GEO) satellite, a medium earth orbit (medium earth orbit, MEO) satellite, a low earth orbit (low earth orbit, LEO) satellite, and the like. In addition, the NTN system may further include a non-terrestrial network device like a high altitude platform station (high altitude platform station, HAPS). The non-terrestrial network device in embodiments of this application is not limited to the foregoing example. The non-terrestrial network device in this application may also be referred to as an air network device.

The NTN system may have a plurality of different architectures. The following provides descriptions by using examples.

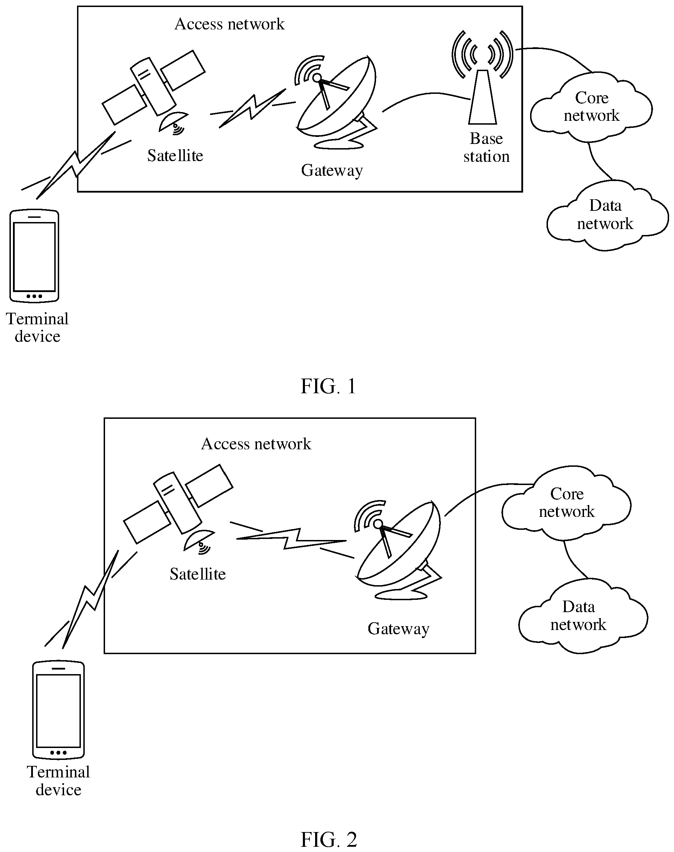

In an example, FIG. 1 is a diagram of a structure of an NTN system. The NTN system includes a non-terrestrial network device, a gateway, a terrestrial base station, a terrestrial core network, and a terminal device. The non-terrestrial network device may be a satellite, for example, a HEO satellite, a GEO satellite, a MEO satellite, or a LEO satellite, or the non-terrestrial network device may be a HAPS. This is not limited herein. In this embodiment of this application, an example in which the non-terrestrial network device is the satellite is used for description. However, in this embodiment of this application, the satellite may alternatively be replaced with another non-terrestrial network device (for example, the HAPS). The gateway (gateway) (or referred to as a terrestrial station, an earth station, a signal gateway station, or a gateway station) may be used to connect the satellite and the base station. One or more satellites may be connected to one or more terrestrial base stations via one or more gateways. This is not limited herein. In FIG. 1, a communication mode of the satellite is a transparent (transparent) transmission mode. To be specific, the satellite serves as an analog radio frequency repeater to implement radio frequency conversion and amplification, and may perform transparent transmission of or copy signals between the base station and the terminal. For example, signals sent by the terminal device may be transparently transmitted by the satellite and forwarded by the gateway to the terrestrial base station.

In another example, FIG. 2 is a diagram of another structure of an NTN system. In FIG. 2, a communication mode of a satellite is a regenerative (regenerative) mode. In the regenerative mode, the satellite may serve as a base station to regenerate signals received from the ground, and may understand and process these signals. For example, the satellite may be a base station carried on an artificial earth satellite or a high altitude aircraft. A gateway may forward signaling between the satellite (namely, the base station) and a core network.

It should be noted that FIG. 2 shows only one satellite and one gateway. In actual use, an architecture with a plurality of satellites and/or a plurality of gateways may be used as required. Each satellite may provide a service for one or more terminal devices, each gateway may correspond to one or more satellites, and each satellite may correspond to one or more gateways. This is not specifically limited in this embodiment of this application.

The communication mode of the satellite is not limited in embodiments of this application. For example, the communication mode of the satellite may be the transparent transmission mode, or may be the regenerative mode.

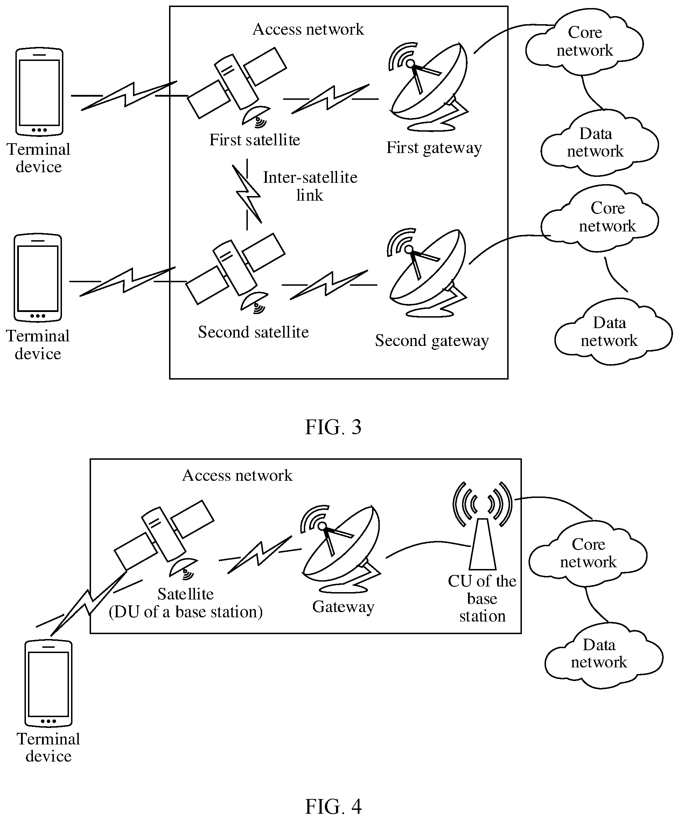

In still another example, FIG. 3 is a diagram of still another structure of an NTN system. In FIG. 3, two satellites (a first satellite and a second satellite) and two gateways (a first gateway and a second gateway) are used as an example. A communication mode of the two satellites is a regenerative mode. To be specific, the two satellites may serve as base stations. A difference between FIG. 3 and FIG. 2 lies in that an inter-satellite link (inter-satellite link, ISL) exists between the two satellites in FIG. 3. In this network architecture, different satellites may communicate with each other through the ISL. In addition, in FIG. 3, an example in which different satellites are connected to different terrestrial core networks is used. In addition, different satellites may alternatively be connected to a same terrestrial core network.

In yet another example, the satellite may alternatively serve as a distributed unit (distributed unit, DU) of the base station, and is separated from a central unit (central unit, CU) of a terrestrial base station, to form a CU-DU split architecture. FIG. 4 is a diagram of yet another structure of an NTN system. A difference between FIG. 4 and FIG. 1 lies in that, in FIG. 4, as a DU of a base station, a satellite may understand, process, and regenerate signals from the ground instead of only performing transparent transmission of or copying the signals, and a terrestrial base station may serve as a CU of the base station. In this network architecture, a serving link between a terminal device and the satellite may be used for transmission of an NR-Uu radio interface signal, a feeder link between the satellite and a gateway is used for transmission of a satellite radio interface (satellite radio interface, SRI) signal, and transmission of an F1 interface signal between the DU and the CU is performed on the SRI signal.

In embodiments of this application, a network device may include a non-terrestrial network device like a satellite, or include an access network (access network, AN) device located on the ground, for example, a base station located on the ground. The network device is an access device that is used by the terminal device to access a mobile communication system in a wireless manner. The network device may alternatively be a device that communicates with the terminal device over an air interface. The access network device in embodiments of this application may include an evolved NodeB (evolved NodeB, eNB, or e-NodeB) in an LTE system or a long term evolution-advanced (long term evolution-advanced, LTE-A) system, a next generation NodeB (next generation NodeB, gNB) in an NR system, an access node in a wireless-fidelity (wireless-fidelity, Wi-Fi) system, or the like. Alternatively, the network device may be a relay station, a vehicle-mounted device, a future evolved public land mobile network (Public Land Mobile Network, PLMN) device, a device in an M2M network, a device in an IoT network, an uncrewed aerial vehicle device, or the like. The access network device in a V2X system may be a road side unit (road side unit, RSU). A specific technology and a specific device form that are used by the network device are not limited in embodiments of this application.

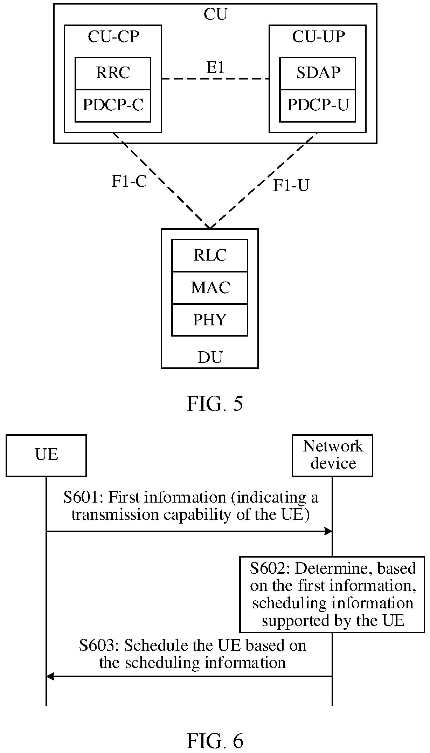

In addition, the base station in embodiments of this application may include a CU and a DU, and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer (for example, a radio resource control (radio resource control, RRC) layer or a service data adaptation protocol (service data adaptation protocol, SDAP) layer) above the packet data convergence protocol layer are set on the CU, and functions of protocol layers below the PDCP layer, for example, a radio link control (radio link control, RLC) layer, a medium access control (medium access control, MAC) layer, and a physical (PHY) layer, are set on the DU. It should be noted that division into the protocol layers is merely an example, and there may be division of other protocol layers. A radio frequency apparatus may be remotely deployed and not placed in the DU, may be integrated into the DU, or may be partially remotely disposed and partially integrated into the DU. This is not limited in this embodiment of this application. In addition, in some implementations, a control plane (control plane, CP) and a user plane (user plane, UP) of the CU may be further separated into different entities for implementation, where the entities are respectively a control-plane CU (CU-CP) and a user-plane CU (CU-UP). For this, refer to FIG. 5. The CU-CP and the CU-UP may communicate with each other through an E1 interface. The CU-CP may include a PDCP-control (PDCP-control, PDCP-C) layer, an RRC layer, and the like. The CU-UP may include a entity and a user-plane CU (CU-UP) entity PDCP-user (PDCP-user, PDCP-U) layer, an SDAP layer, and the like. The CU-CP communicates with the DU through an F1-control (F1-control, F1-C) interface, and the CU-UP communicates with the DU through an F1-user (F1-user, F1-U) interface.

For example, the network device is a base station. The base station may communicate with the terminal device, or may communicate with the terminal device via a relay station. The terminal device may communicate with a plurality of base stations that use different access technologies. For example, the network device is a satellite, and the satellite may be connected to the base station via a gateway. If a communication mode of the satellite is a transparent transmission mode, signals sent by the terminal device may be transparently transmitted by the satellite and forwarded by the gateway to a terrestrial base station. If a communication mode of the satellite is a regenerative mode, the satellite may serve as a base station to process signals sent by the terminal device.

In embodiments of this application, the terminal device is a device having a wireless transceiver function, and may send signals to the network device, or receive signals from the network device. The terminal device may include a user equipment (user equipment, UE), and is sometimes referred to as a terminal, an access station, a UE station, a remote station, a wireless communication device, a user apparatus, or the like. The terminal device is configured to connect a person, an object, a machine, and the like, may be widely used in various scenarios, and includes, for example, but not limited to terminal devices in the following scenarios: cellular communication, D2D, V2X, machine to machine/machine type communication (machine to machine/machine type communication, M2M/MTC), IoT, virtual reality (virtual reality, VR), augmented reality (augmented reality, AR), industrial control (industrial control), self-driving (self-driving), remote medical (remote medical), a smart grid (smart grid), smart furniture, smart office, smart wearable, smart transportation, a smart city (smart city), an uncrewed aerial vehicle, a robot, and the like. For example, the terminal device may be a mobile phone (mobile phone), a tablet computer (Pad), a computer having a wireless transceiver function, a VR terminal, an AR terminal, or the like. If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU). The terminal device in embodiments of this application may alternatively be a vehicle-mounted module, a vehicle-mounted component, a vehicle-mounted chip, or a vehicle-mounted unit that is built in a vehicle as one or more components or units. The vehicle may implement the method in embodiments of this application via the built-in terminal device.

In embodiments of this application, a communication apparatus configured to implement a function of the network device or a function of the terminal device may be the network device or the terminal device, or may be an apparatus that can support the network device or the terminal device in implementing the function, for example, a chip system, and the apparatus may be installed in the network device or the terminal device. In the technical solutions provided in embodiments of this application, an example in which the apparatus configured to implement the function of the network device is the network device, and the apparatus configured to implement the function of the terminal device is the terminal device is used. In addition, for ease of description, an example in which the terminal device is a UE is used for description below in embodiments of this application.

In embodiments of this application, unless otherwise specified, a quantity of nouns represents "a singular noun or plural nouns", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, first information and second information may be same information, or may be different information. In addition, such names do not indicate that the two pieces of information are different in content, sizes, application scenarios, transmitting ends/receiving ends, priorities, importance degrees, or the like. In addition, step numbers in embodiments described in this application are merely used to distinguish between different steps, but are not used to limit a sequence of the steps. For example, S601 may occur before S602, may occur after S602, or may occur simultaneously with S602.

In a satellite communication scenario, because a satellite is far away from the ground, link attenuation is great when the satellite communicates with a UE on the ground. For example, during downlink communication, the link attenuation causes poor quality of receiving signals from the satellite by the UE. A specific link margin needs to be satisfied for a UE to correctly demodulate the received signals. The link margin is, for example, a difference between receiving quality of the UE and a demodulation threshold. A larger link margin indicates a higher demodulation success rate of the UE and better demodulation performance. It can be learned that, if receiving quality of a receiving end is poor, the link margin becomes smaller when the demodulation threshold remains unchanged. Consequently, demodulation performance of the receiving end is reduced. To increase the link margin, the UE needs to be scheduled according to a low-order MCS. In this case, a quantity of valid bits carried in a single time domain unit, for example, a TTI, is small. Generally, in a same transmission distance, a UE with a poorer capability has poorer signal receiving quality. In this case, to increase the link margin, an MCS determined for a UE with a poor capability is low. Consequently, a quantity of valid bits carried in a single time domain unit is small.

Different UEs may have different capabilities. For example, there are some dedicated UEs, which generally have strong capabilities, for example, high antenna gains. If such UEs are scheduled, a quantity of valid bits that can be carried in a single TTI is large, a communication delay is short, and resource overheads are also low. The dedicated UE is a UE having a high-gain antenna apparatus and may be used in a specific communication scenario, for example, a UE having a parabolic antenna. Power of the dedicated UE is not limited. The dedicated UE has a high antenna gain, and may be used as a vehicle-mounted terminal. For another example, some common UEs, or referred to as non-dedicated UEs, for example, handheld terminal devices (for example, mobile phones), generally have poor capabilities, for example, low antenna gains. If such UEs are scheduled, a quantity of valid bits that can be carried in a single TTI is small. Consequently, to-be-transmitted information can be completely carried only by using a plurality of TTIs, resource overheads are high, and a long communication delay is also caused.

To enable UEs with various capabilities to be scheduled, in other words, to ensure that a UE with a poor capability can also operate normally, a communication system may be designed based on a worst UE capability. For example, in an NTN system, considering the link margin, a network device schedules the UE by using the capability of the foregoing common UE as the worst UE capability, and schedules the UE by using the low-order MCS, so that the UE can normally access a base station and perform communication. However, only an excessively small quantity of bits can be scheduled in a single TTI, and transmission of the to-be-transmitted information needs to be completed by using a plurality of time domain units. Consequently, resource overheads are high, and a communication delay is long.

In embodiments of this application, the UE may send first information to the network device, where a transmission capability of the UE is indicated by the first information, so that the network device can determine, based on the transmission capability of the UE, scheduling information supported by the UE. In other words, when scheduling the UE, the network device may perform scheduling with reference to the actual transmission capability of the UE. In this way, the network device does not need to schedule various terminal devices according to a unified scheduling policy. This improves flexibility of a scheduling process, so that the scheduling of the UE can reduce the resource overheads, and ensure an access success rate of the UE. For example, for the dedicated UE described above, the network device may determine, based on an actual transmission capability of the UE, a maximum quantity of data blocks and/or a maximum quantity of bits supported by the UE in a single time domain unit. In this case, the network device does not need to schedule the UE based on the worst UE capability. The actual transmission capability of the dedicated UE is generally better than the worst UE capability, so that the maximum quantity of data blocks and/or the maximum quantity of bits supported by the UE in a single time domain unit may be greater than a maximum quantity of data blocks and/or a maximum quantity of bits supported by a UE corresponding to the worst UE capability in a single time domain unit. Transmission of the to-be-transmitted information may be completed by using a small quantity of time domain units. In this way, receiving performance of the receiving end is not affected, the resource overheads can be reduced, and the communication delay can be reduced. For another example, for the common UE described above, the network device can also determine, based on an actual transmission capability of the UE, a maximum quantity of data blocks and/or a maximum quantity of bits supported by the UE in a single time domain unit, so that normal operating of the UE can be ensured, and the receiving performance of the receiving end can be ensured.

The technical solutions provided in embodiments of this application are described below in detail with reference to the accompanying drawings.

An embodiment of this application provides a communication method. FIG. 6 is a flowchart of the method. The method may be applied to the network architecture shown in any one of FIG. 1 to FIG. 4. For example, a UE in the method is the UE shown in any one of FIG. 1 to FIG. 4. A network device in the method may be located on the ground (in other words, the network device is a terrestrial network device), and the UE may access the network device via a non-terrestrial network device. For example, the non-terrestrial network device is the satellite in FIG. 1, and the network device is the terrestrial base station in FIG. 1. Alternatively, a network device in the method may be a non-terrestrial network device. For example, the network device is the satellite in FIG. 2 or FIG. 3. Alternatively, a network device in the method may include a non-terrestrial network device and/or a terrestrial network device. For example, the non-terrestrial network device is the satellite in FIG. 4, and the terrestrial network device is the terrestrial base station in FIG. 4.

S601: The UE sends first information to the network device. Correspondingly, the network device receives the first information from the UE.

The first information may indicate a transmission capability of the UE, and the transmission capability of the UE may include an uplink transmission capability and/or a downlink transmission capability. The uplink transmission capability may also be referred to as a transmit capability or a sending capability, and the downlink transmission capability may also be referred to as a receiving capability.

The first information may indicate the transmission capability of the UE in a plurality of different indication manners. The following provides descriptions by using examples.
1. First indication manner The first information indicates the transmission capability of the UE by using content included in the first information. Therefore, the first indication manner may also be referred to as an explicit indication manner.

(1) The first information indicates the uplink transmission capability and/or the downlink transmission capability of the UE.

For example, a correspondence between a UE type and the transmission capability of the UE may be predetermined, for example, referred to as a first correspondence. In the first correspondence, one UE type corresponds to one transmission capability. For example, the UE type includes a first type, and in the first correspondence, the first type corresponds to a first transmission capability. For another example, the UE type includes a second type, and in the first correspondence, the second type corresponds to a second transmission capability. For example, the first type is a dedicated type, and a UE of the first type is the foregoing dedicated UE. The second type is a common type, and a UE of the second type is the foregoing common UE. Alternatively, the second type is a dedicated type, and a UE of the second type is the foregoing dedicated UE. The first type is a common type, and a UE of the first type is the foregoing common UE. Alternatively, the first type and/or the second type may be a UE type other than the dedicated type and the common type. This is not specifically limited. In addition, a quantity of UE types is not limited in this application. In other words, there may be more than two UE types. In this application, the first type and the second type are used for description. The first transmission capability and the second transmission capability may be a same transmission capability, or may be different transmission capabilities. The first correspondence may be predefined in a protocol, may be configured by the network device and notified to the UE, or may be determined by the network device and the UE through negotiation.

In this case, the first information may indicate the transmission capability of the UE by indicating a type of the UE. For example, the first information includes type information of the UE, and the type information may indicate the type of the UE. The network device may determine, based on the first correspondence, that a transmission capability corresponding to the type information is the transmission capability of the UE. The transmission capability includes the uplink transmission capability and/or the downlink transmission capability. Specific parameters that may be used to represent the uplink transmission capability and the downlink transmission capability are described later.

(2) The first information indicates the uplink transmission capability of the UE.

In an optional implementation, the first information may include EIRP of the UE. The EIRP of the UE is, for example, a product of maximum transmit power of the UE and a transmit antenna gain of the UE. In other words, the EIRP represents a combination effect of the transmit power and the transmit antenna gain. Alternatively, the EIRP may be a result of combination of maximum transmit power of the UE, a transmit antenna gain of the UE, and another parameter of the UE. This is not limited in this embodiment of this application. The network device may correspondingly determine the maximum transmit power and the transmit antenna gain of the UE based on the EIRP of the UE. Therefore, it may also be understood as that reporting the EIRP of the UE by the UE is equivalent to reporting maximum transmit power information and transmit antenna gain information of the UE. This is equivalent to that the UE can implement reporting of various parameters by reporting only the parameter EIRP. This helps reduce transmission overheads of the first information.

In another optional implementation, the first information may include maximum transmit power information of the UE and/or transmit antenna gain information, and the transmit antenna gain information may indicate a transmit antenna gain of the UE. In other words, the UE may alternatively directly report the maximum transmit power information and/or the transmit antenna gain information of the UE, to reduce an information processing amount of the network device.

In still another optional implementation, the first information may include first capability level information, the first capability level information may indicate a first capability level, and the first capability level is a capability level to which the uplink transmission capability of the UE belongs. For example, one or more uplink capability levels may be obtained through pre-classification, and a correspondence between an uplink capability level and an uplink transmission capability is determined, for example, referred to as a second correspondence. In the second correspondence, one uplink capability level may correspond to one uplink transmission capability, and uplink transmission capabilities corresponding to different uplink capability levels are the same or different. The second correspondence may be preset, for example, may be predefined in a protocol, may be configured by the network device and notified to the UE, or may be determined by the network device and the UE through negotiation. In the second correspondence, the uplink transmission capability may be represented by using a corresponding parameter. For example, if the uplink transmission capability is represented by using EIRP of the UE, different uplink capability levels may correspond to different EIRP or different EIRP ranges. For example, Table 1 is an example of a correspondence between the uplink capability level and the EIRP range. It should be noted that Table 1 is merely an example. For example, the correspondence between the uplink capability level and the EIRP range in this embodiment of this application may include one or more items in Table 1 (one row in Table 1 is considered as one item), or the correspondence between the uplink capability level and the EIRP range in this embodiment of this application may further include another item that is not included in Table 1.

**Table 1**

| Uplink capability level of the UE | EIRP (dBW) |
|---|---|
| 0 | <-15 |
| 1 | ≥-15 and <-5 |
| 2 | ≥-5 and <5 |
| 3 | ≥5 and <15 |
| 4 | ≥15 |

It can be learned from Table 1 that different uplink capability levels respectively correspond to corresponding EIRP ranges. For example, if the uplink capability level of the UE is 1, a corresponding EIRP range is [-15, -5) decibel watts (dBW). It can be learned that the EIRP corresponding to the UE can be determined based on the uplink capability level of the UE.

Alternatively, the uplink transmission capability may be represented by using a first parameter. In this case, different uplink capability levels may correspond to different values of the first parameter, or correspond to different value ranges of the first parameter. The first parameter may include maximum transmit power and/or transmit antenna gain of the UE. Alternatively, the uplink transmission capability may be represented by using another parameter. This is not specifically limited. The first capability level is, for example, one of the one or more uplink capability levels. Once determining the first capability level, the network device can determine that an uplink transmission capability corresponding to the first capability level is the uplink transmission capability of the UE.

It can be learned from descriptions in articles (1) and (2) that, if the uplink transmission capability of the UE needs to be indicated, the first information may include the type information of the UE, the EIRP of the UE, the maximum transmit power information and/or the transmit antenna gain information of the UE, or the first capability level information. Optionally, the first information may include one or more of the foregoing information. In other words, the first information may include one or more of the following: the type information of the UE, the EIRP of the UE, the maximum transmit power information and/or the transmit antenna gain information of the UE, or the first capability level information. For example, the first information may include the type information of the UE and the EIRP of the UE, so that the network device can learn of the uplink transmission capability of the UE and determine the type of the UE.

(3) The first information indicates the downlink transmission capability of the UE.

In an optional implementation, the first information may include receive antenna gain information and/or received noise information of the UE, and the receive antenna gain information may indicate a receive antenna gain of the UE. The received noise information of the UE indicates, for example, received noise power of the UE.

In another optional implementation, the first information may include second capability level information, the second capability level information may indicate a second capability level, and the second capability level is a capability level to which the downlink transmission capability of the UE belongs. For example, one or more downlink capability levels may be obtained through pre-classification, and a correspondence between a downlink capability level and a downlink transmission capability is determined, for example, referred to as a third correspondence. In the third correspondence, one downlink capability level may correspond to one downlink transmission capability, and downlink transmission capabilities corresponding to different downlink capability levels are the same or different. The third correspondence may be preset, for example, may be predefined in a protocol, may be configured by the network device and notified to the UE, or may be determined by the network device and the UE through negotiation. In the third correspondence, the downlink transmission capability may be represented by using a corresponding parameter. For example, if the downlink transmission capability is represented by using a second parameter, different downlink capability levels may correspond to different values of the second parameter or different value ranges of the second parameter. The second parameter may include received noise power and/or receive antenna gain of the UE. Alternatively, the downlink transmission capability may be represented by using another parameter. This is not specifically limited. The second capability level is, for example, one of the one or more downlink capability levels. Once determining the second capability level, the network device can determine that a downlink transmission capability corresponding to the second capability level is the downlink transmission capability of the UE.

It can be learned from descriptions in articles (1) and (3) that, if the downlink transmission capability of the UE needs to be indicated, the first information may include the type information of the UE, the received noise information and/or the receive antenna gain information of the UE, or the second capability level information. Optionally, the first information may include one or more of the foregoing information. In other words, the first information may include one or more of the following: the type information of the UE, the received noise information and/or the receive antenna gain information of the UE, or the second capability level information. For example, the first information may include the type information of the UE and the second capability level information, so that the network device can learn of the downlink transmission capability of the UE and determine the type of the UE.

In the first indication manner, the first information may indicate the transmission capability of the UE by using the information included in the first information, so that the network device can quickly and accurately obtain the transmission capability of the UE, to efficiently schedule the UE.

2. Second indication manner The transmission capability of the UE is indicated by the first information. The second indication manner may also be referred to as an implicit indication manner.

For example, a correspondence between a UE type and the transmission capability of the UE, for example, a first correspondence, may be predetermined. For descriptions of the first correspondence, refer to the foregoing descriptions.

In addition, a correspondence between the first information and the UE type may be further predetermined, for example, referred to as a fourth correspondence. In the fourth correspondence, one type of first information corresponds to one UE type, and different pieces of first information are distinguished by, for example, by using different identifiers. For example, if the first information sent by the UE in S601 corresponds to a UE of a first type, in other words, the first information is first information corresponding to the UE of the first type, the network device may determine, based on the fourth correspondence, that the first information corresponds to the first type, and then determine, based on the first correspondence, that a transmission capability corresponding to the first type, for example, a first transmission capability, is the transmission capability of the UE. For another example, if the first information sent by the UE in S601 corresponds to a UE of a second type, in other words, the first information is information corresponding to the UE of the second type, the network device may determine, based on the fourth correspondence, that the first information corresponds to the second type, and then determine, based on the first correspondence, that a transmission capability corresponding to the second type, for example, a second transmission capability, is the transmission capability of the UE. The rest can be deduced by analogy.

Alternatively, the first correspondence and the fourth correspondence may be replaced with a fifth correspondence. In other words, the fifth correspondence rather than the first correspondence and the fourth correspondence is applied. For example, the fifth correspondence is a correspondence among the UE type, the transmission capability of the UE, and the first information. A manner of applying the fifth correspondence by the network device is similar to a manner of applying the first correspondence and the fourth correspondence. Details are not described again.

In the second indication manner, the transmission capability of the UE may be indicated by the first information, and the first information does not need to include additional indication information. This helps reduce the resource overheads.

In addition to the foregoing two indication manners, the first information may alternatively indicate the transmission capability of the UE in another manner, and no further example is provided.

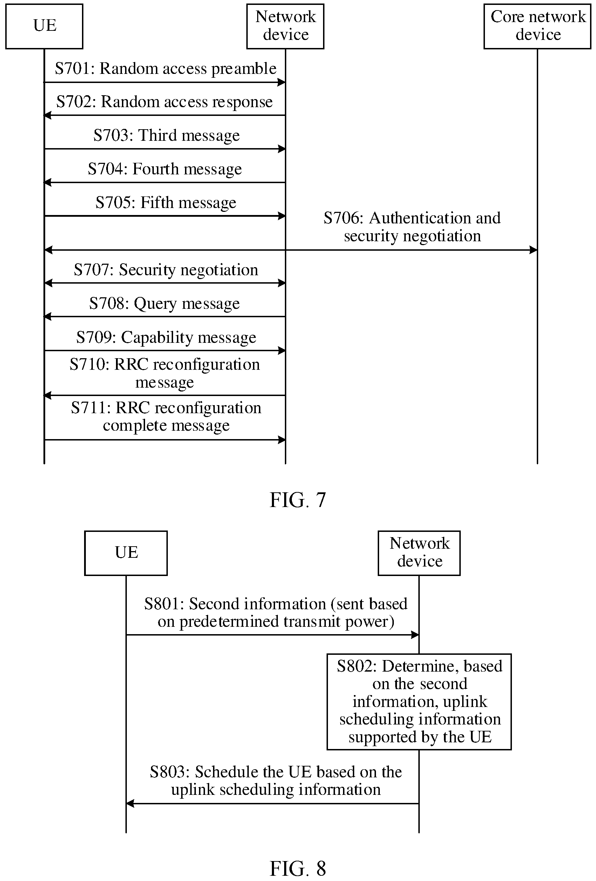

In this embodiment of this application, the UE may send the first information to the network device by using a message in an existing communication procedure, in other words, may include the first information in the message in the existing communication procedure. Alternatively, the UE may send the first information by using a newly defined message, for example, a newly defined message dedicated to sending the first information. To enable the network device to learn of the transmission capability of the UE as early as possible, optionally, the UE may send the first information to the network device in a process of accessing a network. That the UE accesses the network may include accessing the network device and accessing a core network device. The access process of the UE and a specific message in the access process in which the first information may be carried for sending are described later with reference to FIG. 7.

S602: The network device determines, based on the first information, scheduling information supported by the UE.

Once obtaining the first information, the network device may determine, based on the first information, the scheduling information supported by the UE. The scheduling information may also be referred to as a scheduling parameter, a scheduling policy, or the like. A name is not limited in this embodiment of this application. For example, the scheduling information includes a maximum quantity of data blocks and/or a maximum quantity of bits that can be transmitted in a single time domain unit, in other words, includes a maximum quantity of data blocks and/or a maximum quantity of bits that is supported by the UE for transmission in a single time domain unit. It can be learned that a minimum quantity of time domain units scheduled for the UE may be determined based on the scheduling information and with reference to an amount of to-be-transmitted information of the UE. Therefore, the scheduling information may also be referred to as a fragmentation policy, and a "fragment" is a time domain unit. The to-be-transmitted information of the UE includes, for example, data and/or signaling. In addition, the maximum quantity of data blocks herein is a maximum quantity of valid data blocks. Similarly, the maximum quantity of bits is a maximum quantity of valid bits. As described above, the transmission capability of the UE includes the uplink transmission capability and/or the downlink transmission capability. Correspondingly, the scheduling information supported by the UE may also include uplink scheduling information and/or downlink scheduling information. If the first information indicates the uplink transmission capability of the UE, the scheduling information may include the uplink scheduling information. If the first information indicates the downlink transmission capability of the UE, the scheduling information may include the downlink scheduling information. The uplink scheduling information includes, for example, a maximum quantity of data blocks and/or a maximum quantity of bits that can be transmitted in an uplink in a single time domain unit, which may also be referred to as a maximum quantity of uplink data blocks and/or a maximum quantity of uplink bits that can be transmitted in a single time domain unit, or a maximum quantity of data blocks and/or a maximum quantity of bits that can be transmitted in an uplink direction in a single time domain unit. The downlink scheduling information includes, for example, a maximum quantity of data blocks and/or a maximum quantity of bits that can be transmitted in a downlink in a single time domain unit, which may also be referred to as a maximum quantity of downlink data blocks and/or a maximum quantity of downlink bits that can be transmitted in a single time domain unit, or a maximum quantity of data blocks and/or a maximum quantity of bits that can be transmitted in a downlink direction in a single time domain unit.

For example, the maximum quantity of data blocks and/or the maximum quantity of bits that may be included in the uplink scheduling information and that can be transmitted in the uplink in a single time domain unit may be understood as a maximum quantity of valid data blocks and/or a maximum quantity of valid bits that can be sent by the UE to the network device in a single time domain unit. Similarly, the maximum quantity of data blocks and/or the maximum quantity of bits that may be included in the downlink scheduling information and that can be transmitted in the downlink in a single time domain unit may be understood as a maximum quantity of valid data blocks and/or a maximum quantity of valid bits that can be sent by the network device to the UE in a single time domain unit.

Optionally, for the uplink scheduling information, the maximum quantity of bits that is supported by the UE for transmission in a single time domain unit means: If a quantity of valid bits that the network device schedules the UE to send in a single time domain unit is less than or equal to the maximum quantity of bits, the network device can correctly demodulate information from the UE. If a quantity of valid bits that the network device schedules the UE to send in a single time domain unit is greater than the maximum quantity of bits, the network device may not correctly demodulate information from the UE. For example, if the UE sends uplink information based on the maximum quantity of bits, a difference between received signal strength of the network device for the uplink information and a demodulation threshold of the network device (that is, a link margin) can satisfy a demodulation requirement of the network device. For the downlink scheduling information, the maximum quantity of bits that is supported by the UE for transmission in a single time domain unit means: If a quantity of valid bits sent by the network device to the UE in a single time domain unit is less than or equal to the maximum quantity of bits, the UE can correctly demodulate information from the network device. If a quantity of valid bits sent by the network device to the UE in a single time domain unit is greater than the maximum quantity of bits, the UE may not correctly demodulate information from the network device. For example, if the network device sends downlink information based on the maximum quantity of bits, a difference between received signal strength of the UE for the downlink information and a demodulation threshold of the UE (that is, a link margin) can satisfy a demodulation requirement of the UE. The demodulation threshold of the network device is the same as or different from the demodulation threshold of the UE. In addition, an understanding of the maximum quantity of data blocks is similar. Details are not described again.

In this embodiment of this application, the time domain unit is, for example, a frame (frame), a subframe (subframe), a TTI, a slot (slot), a mini-slot (mini-slot), an orthogonal frequency division multiplexing (orthogonal frequency division multiplexing, OFDM) symbol (symbol), or the like.

For example, if the first information indicates the uplink transmission capability of the UE, the network device may determine the uplink scheduling information of the UE based on the first information. For example, a manner in which the network device determines the uplink scheduling information of the UE is as follows: The network device may determine first received signal strength based on the first information, where the first received signal strength is received signal strength of the network device for the information from the UE. The network device may determine an MCS, for example, referred to as a first MCS, based on the first received signal strength. The network device may determine, according to the first MCS, the uplink scheduling information supported by the UE.

For example, the first information sent by the UE includes the EIRP of the UE, where the EIRP=A. The network device may determine, based on this, maximum signal strength of a signal from the UE when the signal arrives at a physical layer of the network device, in other words, determine received signal strength of the network device for the signal from the UE (for example, the first received signal strength). For example, the first received signal strength is represented by a signal-to-noise ratio (signal-to-noise ratio, SNR), where the SNR=A-PL-another loss (including a noise factor (noise factor) of a receiving end, rain fade (rain fade), and the like)+an antenna gain of the receiving end. The noise factor of the receiving end is signal attenuation caused by a transmission link of a system. The rain fade is signal attenuation caused by rainfall.

The PL represents a path loss, and may be calculated based on a distance from a satellite to the ground. For example, the PL=20log₁₀(*f*)+20log₁₀(*d*)+92.45, where *f* represents a communication frequency between the network device and the UE, and *d* represents the distance from the satellite to the ground. The another loss includes, for example, the noise factor and/or the rain fade of the receiving end (for example, the network device), and may be determined based on a hardware indicator of the receiving end (for example, the network device). For example, a parameter like the rain fade may use a predefined value. For example, if a correspondence between environment information and an attenuation value is predefined, a corresponding attenuation value may be determined based on current environment information, and the attenuation value may be used as current rain fade. In this case, the antenna gain of the receiving end is a receive antenna gain of the network device.

The network device determines the SNR, and there is a mapping relationship between the SNR and the MCS. For example, the network device may define the mapping relationship between the SNR and the MCS based on the demodulation threshold of the network device. The mapping relationship means that, in a channel condition of SNR=x, demodulation can succeed when a maximum value of the MCS is *y*. Therefore, the network device can determine a corresponding MCS, for example, the first MCS, based on the mapping relationship and the determined SNR.

The network device may determine, according to the first MCS, the maximum quantity of data blocks and/or the maximum quantity of bits that can be transmitted in the uplink by the UE in a single time domain unit. For example, the network device may determine, according to the first MCS, spectral efficiency (spectral efficiency) information of the UE by querying Table 2. For example, the spectral efficiency information is represented as C. Optionally, one type of Table 2 is shown as follows. This Table 2 is a 5G PUSCH MCS index table (index table).

**Table 2**

| **MCS Index *I_{MCS}*** | **Modulation order (Modulation Order) *Qₘ*** | **Target code rate (Target code Rate) *R* × 1024** | **Spectral efficiency** |
|---|---|---|---|
| 0 | 1 | 240 | 0.2344 |
| 1 | 1 | 314 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved (reserved) | |
| 29 | 2 | reserved | |
| 30 | 4 | reserved | |
| 31 | 6 | reserved | |

For example, if an index of the first MCS is 10 in Table 2, the network device may determine, by querying Table 2, that the spectral efficiency information C of the UE is equal to 1.3281. After determining the spectral efficiency information C of the UE, the network device may determine the maximum quantity of bits that can be transmitted in the uplink by the UE in a single time domain unit. The maximum quantity of bits=C×R, where R represents a quantity of valid resource elements (resource elements, REs), and the valid REs may include all REs used to carry a PUSCH in a single time domain unit. In this way, the network device determines the uplink scheduling information of the UE. In addition, if the network device has determined a quantity of bits of uplink information to be sent by the UE, the network device may further determine, based on the quantity of bits of the uplink information to be sent by the UE and the maximum quantity of bits that can be transmitted in the uplink by the UE in a single time domain unit, a minimum quantity of uplink time domain units scheduled for the UE. Optionally, when the network device actually schedules the UE, a quantity of bits that are scheduled for the UE and that are transmitted in a single time domain unit may be less than or equal to the maximum quantity, indicated by the uplink scheduling information, of bits that can be transmitted in the uplink by the UE in a single time domain unit. Correspondingly, a quantity of uplink time domain units scheduled by the network device for the UE may be greater than or equal to the minimum quantity of uplink time domain units.

For another example, if the first information indicates the downlink transmission capability of the UE, the network device may determine the downlink scheduling information of the UE based on the first information. For example, a manner in which the network device determines the downlink scheduling information of the UE is as follows: The network device may determine second received signal strength based on the first information, where the second received signal strength is received signal strength of the UE for the information from the network device. The network device may determine an MCS, for example, referred to as a second MCS, based on the second received signal strength. The network device may determine, according to the second MCS, the downlink scheduling information supported by the UE.

For example, the first information sent by the UE includes the receive antenna gain information of the UE. The network device may determine, based on this, maximum signal strength of a signal from the network device when the signal arrives at a physical layer of the UE, in other words, determine received signal strength of the UE for the signal from the network device (for example, the second received signal strength). For example, the received signal strength is represented by an SNR, where the SNR=EIRP of the network device-PL-another loss+an antenna gain of a receiving end.

The PL represents a path loss, and may be calculated based on a distance from a satellite to the ground. For example, the PL=20log₁₀(*f*)+20log₁₀(*d*)+92.45, where *f* represents a communication frequency, and *d* represents the distance from the satellite to the ground. The another loss includes, for example, a noise factor and/or rain fade of the receiving end (for example, the UE), and may be determined based on a hardware indicator of the receiving end (for example, the UE). For example, a parameter like the rain fade may use a predefined value. For example, if a correspondence between environment information and an attenuation value is predefined, a corresponding attenuation value may be determined based on current environment information, and the attenuation value may be used as current rain fade. In this case, the antenna gain of the receiving end is the receive antenna gain of the UE, namely, the gain indicated by the receive antenna gain information from the UE.

The network device may determine a corresponding MCS, for example, a second MCS, based on a determined SNR and a mapping relationship between the SNR and the MCS. For details, refer to determining of the first MCS. Details are not described again.

Further, the network device may determine, according to the second MCS, the maximum quantity of data blocks and/or the maximum quantity of bits that can be transmitted in the downlink by the UE in a single time domain unit. For example, the network device may determine, according to the second MCS, spectral efficiency information of the UE by querying Table 3. For example, the spectral efficiency information is represented as C. Optionally, one type of Table 3 is shown as follows. This Table 3 is a 5G PDSCH MCS index table.

**Table 3**

| **MCS Index *I_{MCS}*** | **Modulation Order *Qₘ*** | **Target code Rate *R* × [1024]** | **Spectral efficiency** |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

For example, if an index of the second MCS is 6 in Table 3, the network device may determine, by querying Table 3, that the spectral efficiency information C of the UE is equal to 0.8770. After determining the spectral efficiency information C of the UE, the network device may determine the maximum quantity of bits that can be transmitted in the downlink by the UE in a single time domain unit. The maximum quantity of bits=C×R, where R represents a quantity of valid REs, and the valid REs may include all REs used to carry a physical downlink shared channel (physical downlink shared channel, PDSCH) in the time domain unit. In this way, the network device determines the downlink scheduling information of the UE. In addition, if the network device has determined a quantity of bits of downlink information to be sent to the UE, the network device may further determine, based on the quantity of bits of the downlink information to be sent to the UE and the maximum quantity of bits that can be transmitted in the downlink by the UE in a single time domain unit, a minimum quantity of downlink time domain units scheduled for the UE. Optionally, when the network device actually schedules the UE, a quantity of bits that are scheduled for the UE and that are transmitted in a single time domain unit may be less than or equal to the maximum quantity, indicated by the downlink scheduling information, of bits that can be transmitted in the downlink by the UE in a single time domain unit. Correspondingly, a quantity of downlink time domain units scheduled by the network device for the UE may be greater than or equal to the minimum quantity of downlink time domain units.

S603: The network device schedules the UE based on the scheduling information supported by the UE.

Specifically, the network device may schedule uplink transmission of the UE based on the uplink scheduling information, or schedule downlink transmission of the UE based on the downlink scheduling information. The uplink scheduling information includes the maximum quantity of data blocks and/or the maximum quantity of bits that can be transmitted in the uplink by the UE in a single time domain unit, and the downlink scheduling information includes the maximum quantity of data blocks and/or the maximum quantity of bits that can be transmitted in the downlink by the UE in a single time domain unit. It may be understood that the maximum quantity of bits that can be transmitted in the uplink/downlink by the UE in a single time domain unit may be used to schedule uplink/downlink signaling transmission, or may be used to schedule uplink/downlink data transmission. The maximum quantity of data blocks that can be transmitted in the uplink/downlink by the UE in a single time domain unit may be used to schedule uplink/downlink data transmission. The following uses an example in which the network device schedules uplink/downlink transmission based on the maximum quantity of bits that can be transmitted in the uplink/downlink by the UE in a single time domain unit for description.

For example, the network device determines, based on the first information, the uplink scheduling information supported by the UE. In this case, if the network device needs to schedule the UE to perform uplink transmission, the network device may perform scheduling based on the uplink scheduling information. For example, if the uplink scheduling information includes the maximum quantity C₁ of bits that can be transmitted in the uplink by the UE in a single time domain unit, the network device may indicate the UE to send C₂ valid bits in a single time domain unit, where C₂ is less than or equal to C₁, and the C₂ valid bits may be used for uplink signaling or uplink data transmission. In addition, if the network device knows an amount of to-be-sent uplink data of the UE, for example, the UE has indicated the amount of the to-be-sent uplink data to the network device by using information such as a buffer status report (buffer status report, BSR), the network device may determine, based on the amount of the uplink data and C₁, the minimum quantity Q₁ of uplink time domain units scheduled for the UE. In this way, the network device may determine the quantity Q₂ of uplink time domain units scheduled for the UE, where Q₂ is greater than or equal to Q₁. For example, the network device sends first scheduling signaling to the UE, where the first scheduling signaling may indicate C₂ and Q₂. In this way, the UE may send the uplink data to the network device in Q₂ uplink time domain units, where C₂ valid bits that carry the uplink data may be sent in each uplink time domain unit. The first scheduling signaling is, for example, uplink control information (uplink control information, UCI), or may be signaling of another protocol layer.

For another example, the network device determines, based on the first information, the downlink scheduling information supported by the UE. In this case, if the network device needs to schedule the UE to perform downlink transmission, the network device may perform scheduling based on the downlink scheduling information. For example, if the downlink scheduling information includes the maximum quantity C₃ of bits that can be transmitted in the downlink by the UE in a single time domain unit, the network device may send C₄ valid bits to the UE in a single time domain unit, where C₄ is less than or equal to C₃, and the C₄ valid bits may be used for downlink signaling or downlink data transmission. In addition, the network device may determine, based on an amount of to-be-sent downlink data and C₃, the minimum quantity Q₃ of downlink time domain units scheduled for the UE. In this way, the network device may determine the quantity Q₄ of downlink time domain units scheduled for the UE, where Q₄ is greater than or equal to Q₃. For example, the network device sends second scheduling signaling to the UE, where the second scheduling signaling may indicate C₄ and Q₄. In this way, the network device may send the downlink data to the UE in Q₄ downlink time domain units, where C₄ valid bits that carry the downlink data may be sent in each downlink time domain unit. The second scheduling signaling is, for example, DCI, or may be signaling of another protocol layer.

In addition, as described above, the UE may send the first information to the network device in the process of accessing the network. For example, FIG. 7 is a flowchart of an access process of the UE. In FIG. 7, a 4-step (step) random access (random access, RA) procedure is used as an example.

S701: The UE sends a random access preamble (preamble) to the network device. Correspondingly, the network device receives the preamble from the UE. For example, the UE may send the preamble to the network device on a physical random access channel (physical random access channel, PRACH).

S702: The network device sends a random access response (random access response, RAR) to the UE. Correspondingly, the UE receives the RAR from the network device.

S703: The UE sends a Msg3 to the network device. Correspondingly, the network device receives the Msg3 from the UE.

S704: The network device sends contention resolution (contention resolution) information to the UE. Correspondingly, the UE receives the contention resolution information from the network device. The contention resolution information may be carried in a fourth message (Msg4).

S705: The UE sends a Msg5 to the network device. Correspondingly, the network device receives the Msg5 from the UE. For example, the Msg5 is a response of the UE to the Msg4.

S706: The UE and a core network device perform authentication, security negotiation, and the like. The core network device is, for example, an access and mobility management function (access and mobility management function, AMF), or may be another device.

That the UE and the core network device perform authentication may include: The core network device performs authentication on the UE, and/or the UE performs authentication on the core network device. The security negotiation may be used by the UE and the core network device to negotiate a corresponding security parameter.

S707: The UE and the network device perform security negotiation and the like. The security negotiation may be used by the UE and the network device to negotiate a corresponding security parameter.

S708: The network device sends a query message to the UE. Correspondingly, the UE receives the query message from the network device. The query message is used to query a capability of the UE.

S709: The UE sends a capability message to the network device. Correspondingly, the network device receives the capability message from the UE. The capability message may be used to carry capability information of the UE. For example, the capability message is an RRC message, and the RRC message is, for example, a UE capability information (UE capability information) message. Alternatively, the capability message may be a message of another protocol layer.

S710: The network device sends an RRC reconfiguration (RRC reconfiguration) message to the UE. Correspondingly, the UE receives the RRC reconfiguration message from the network device. The RRC reconfiguration message may be used to configure a corresponding resource for the UE, configure a parameter of a corresponding protocol layer, or the like.

S711: The UE sends an RRC reconfiguration complete (RRC reconfiguration complete) message to the network device. Correspondingly, the network device receives the RRC reconfiguration complete message from the UE.

Then, the UE and the core network device perform corresponding non-access stratum (non-access stratum, NAS) negotiation, so that the UE completes a connection to the core network device.

Optionally, first information in this embodiment of this application may be included in the capability message in S709. For example, a field may be newly defined in the capability message to carry the first information, an existing field in the capability message may be extended to carry the first information, or a reserved field in the capability message may be used to carry the first information. The first information indicates the transmission capability of the UE. Therefore, the first information may also be considered as a type of capability information of the UE. That the first information is included in the capability message is equivalent to that the UE reports various capability information of the UE, and the network device can obtain the various capability information of the UE by using one message. In this case, the first information may indicate the transmission capability of the UE in the foregoing first indication manner or second indication manner.

Alternatively, the first information may be included in the Msg3, for example, the Msg3 in S703. For example, a field may be newly defined in the Msg3 to carry the first information. The first information is reported by using the Msg3, so that the network device can learn of the transmission capability of the UE earlier. In this way, the scheduling information of the UE can be determined in a more timely manner. In this case, the first information may indicate the transmission capability of the UE in the foregoing first indication manner or second indication manner.

Alternatively, the first information may be carried by using a newly defined message. For example, a MAC CE may be newly defined to carry the first information. Transmission of the MAC CE is performed, for example, after S704, or may be performed at other time. The MAC CE is sent by the UE to the network device. The newly defined message is used to carry the first information, so that a structure of an original message may not be changed. This helps maintain stability of the original message. In addition, the network device may determine, based on the newly defined message, that the message carries the first information. Implementation is simple. In this case, the first information may indicate the transmission capability of the UE in the foregoing first indication manner or second indication manner.

Alternatively, the first information may be implemented by using the preamble in S701. In this case, the first information may indicate the transmission capability of the UE in the foregoing second indication manner. For example, the fourth correspondence may include a correspondence between the preamble and the UE type, so that the first information sent by the UE in S601 may be the preamble corresponding to the UE type. For example, if the UE type is the first type, the first information sent by the UE in S601 may be a preamble corresponding to the first type. In a process in which the UE establishes a connection to the network device, the preamble is usually a first message sent by the UE, and is also an earliest message received by the network device from the UE. Therefore, the preamble is used as the first information, so that the network device can obtain the first information more quickly (in other words, earlier). In addition, because a format of the preamble is simple and an information amount is small, efficiency of parsing the preamble by the network device is high, so that the network device can obtain the first information more quickly, to determine the scheduling information of the UE in a more timely manner.

According to the method described above, the network device determines the scheduling information supported by the UE, and then the network device can schedule the UE based on the scheduling information, and does not need to schedule various terminal devices according to a unified scheduling policy. This improves flexibility of a scheduling process, so that scheduling of the UE can reduce resource overheads as much as possible, and ensure an access success rate of the UE. For example, if the actual transmission capability of the UE is better than a worst terminal device capability, the maximum quantity of data blocks and/or the maximum quantity of bits supported by the UE in a single time domain unit may be greater than a maximum quantity of data blocks and/or a maximum quantity of bits supported by a UE corresponding to the worst UE capability in a single time domain unit, so that the resource overheads can be reduced, and an access delay of the UE is reduced. For another example, if the actual transmission capability of the UE is poor, the network device can also determine, based on the actual transmission capability of the UE, the maximum quantity of data blocks and/or the maximum quantity of bits supported by the UE in a single time domain unit, so that normal operating of the UE can be ensured, and receiving performance of the receiving end can be ensured. It can be learned that the method provided in this embodiment of this application is applicable to various types of UEs with different capabilities.

To resolve a same technical problem, an embodiment of this application further provides another communication method. FIG. 8 is a flowchart of the method. The method may be applied to the network architecture shown in any one of FIG. 1 to FIG. 4. For example, a UE in the method is the UE shown in any one of FIG. 1 to FIG. 4, and a network device in the method is the terrestrial base station in FIG. 1, the satellite in FIG. 2 or FIG. 3, or the satellite and/or the terrestrial base station in FIG. 4.

S801: The UE sends second information to the network device. Correspondingly, the network device receives the second information from the UE. Transmit power of the second information is, for example, predetermined transmit power. The predetermined transmit power may be preset, for example, predefined in a protocol, configured by the network device and indicated to the UE, or determined by the network device and the UE through negotiation. Optionally, the predetermined transmit power may be less than or equal to maximum transmit power of the UE. For example, one type of predetermined transmit power is the maximum transmit power of the UE. For different UEs, predetermined transmit power may be the same or different. For example, all UEs covered by the network device may use same predetermined transmit power, or different UEs may use different predetermined transmit power. Predetermined transmit power used by a UE may be determined based on a factor like a capability of the UE.

The second information includes, for example, one or more of a preamble, a Msg3, a Msg5, or information carried on a PUSCH. Optionally, the information carried on the PUSCH is, for example, uplink control information (uplink control information, UCI). This is equivalent to that the UE may send one or more pieces of uplink information to the network device based on the predetermined transmit power, so that the network device may determine uplink scheduling information of the UE by using the uplink information from the UE.

In an implementation, before S801, the network device may send third information. The third information may indicate the second information, in other words, the third information may indicate the UE to send the second information based on the predetermined transmit power. Optionally, if the predetermined transmit power is configured by the network device and indicated to the UE, the third information may further indicate the predetermined transmit power. In other words, the third information may indicate the predetermined transmit power and the second information. For example, the third information is sent in a broadcast manner. For example, the third information is system information, or may be other broadcast information. Alternatively, the third information may be sent in a unicast manner. This is equivalent to that the network device indicates, by using the third information, that the second information should be sent based on the predetermined transmit power. In this case, when sending the second information, the UE may send the second information based on the maximum transmit power of the UE. For example, the third information is the system information, a RAR, or information carried on a PDCCH. The information carried on the PDCCH is, for example, downlink control information (downlink control information, DCI), or may be information included in the DCI, for example, uplink grant (UL grant) information and/or downlink grant (DL grant) information included in the DCI.

For example, if the second information is the Msg3, the third information may be the RAR, or may be the system information. For another example, if the second information is the Msg5 or the information carried on the PUSCH, the third information may be the information carried on the PDCCH, or may be the system information.

Alternatively, the second information may be predefined. In this case, the network device does not need to send the third information, and the UE may determine, based on predefined content, that the second information is information that should be sent based on the predefined transmit power.

S802: The network device determines, based on the second information, the uplink scheduling information supported by the UE.

Once obtaining the second information, the network device may determine, based on the second information, the uplink scheduling information supported by the UE. The uplink scheduling information may include a maximum quantity of data blocks and/or a maximum quantity of bits that can be transmitted in an uplink in a single time domain unit. For related descriptions of the scheduling information and descriptions of content like the time domain unit, refer to S602 in the embodiment shown in FIG. 6.

In this embodiment of this application, if the network device knows that the UE sends the second information based on the predetermined transmit power, the network device determines, based on the second information, the uplink scheduling information supported by the UE. For example, a manner in which the network device determines, based on the second information, the uplink scheduling information supported by the UE is as follows: The network device may determine received signal strength for the second information. The network device may determine a corresponding MCS based on the received signal strength. The network device may determine, according to the MCS, the uplink scheduling information supported by the UE.

For example, the network device may determine the received signal strength for the second information by measuring the received second information. For example, the received signal strength is represented by an SNR. In this example, an example in which the predetermined transmit power is the maximum transmit power is used. There is a mapping relationship between the SNR and the MCS. For example, the network device may define the mapping relationship between the SNR and the MCS based on a demodulation threshold of the network device. The mapping relationship means that, in a channel condition of SNR=x, demodulation can succeed when a maximum value of the MCS is y. Therefore, the network device can determine a corresponding MCS based on the mapping relationship and the determined SNR.

Further, the network device may determine, according to the MCS, the maximum quantity of data blocks and/or the maximum quantity of bits that can be transmitted in the uplink by the UE in a single time domain unit. For example, the network device may determine, according to the MCS, spectral efficiency information of the UE by querying a table (for example, for the table, refer to Table 2 in the embodiment shown in FIG. 6). For example, if the spectral efficiency information is represented as C, the maximum quantity of bits that can be transmitted in the uplink by the UE in a single time domain unit=C×R, where R represents a quantity of valid REs, and the valid REs may include all REs used to carry the PUSCH in the time domain unit. In this way, the network device determines the uplink scheduling information of the UE. In addition, if the network device has determined a quantity of bits of uplink information to be sent by the UE, the network device may further determine, based on the quantity of bits of the uplink information to be sent by the UE and the maximum quantity of bits that can be transmitted in the uplink by the UE in a single time domain unit, a minimum quantity of uplink time domain units scheduled for the UE.

S803: The network device schedules the UE based on the uplink scheduling information supported by the UE.

The network device determines the uplink scheduling information supported by the UE. If the network device needs to schedule the UE to perform uplink transmission, the network device may perform scheduling based on the uplink scheduling information. For more descriptions of this step, refer to S603 in the embodiment shown in FIG. 6.

In this embodiment of this application, the UE does not need to indicate a transmission capability of the UE to the network device, but sends the second information to the network device based on the predetermined transmit power. The network device may also determine the transmission capability of the UE based on the second information, to determine the uplink scheduling information of the UE. According to the technical solutions in this embodiment of this application, a reporting amount of the UE is reduced, and resource overheads are reduced. The network device may determine an uplink scheduling policy based on the actual transmission capability that is of the UE and that is determined based on the second information. This improves flexibility of a scheduling process, so that the scheduling of the UE can reduce the resource overheads as much as possible, and ensure an access success rate of the UE. For example, if the actual transmission capability of the UE is better than a worst terminal device capability, a maximum quantity of data blocks and/or a maximum quantity of bits supported by the UE in a single time domain unit may be greater than a maximum quantity of data blocks and/or a maximum quantity of bits supported by a UE corresponding to the worst UE capability in a single time domain unit, so that the resource overheads can be reduced, and an access delay of the UE can be reduced. For another example, if the actual transmission capability of the UE is poor, the network device can also determine, based on the actual transmission capability of the UE, a maximum quantity of data blocks and/or a maximum quantity of bits supported by the UE in a single time domain unit, so that normal operating of the UE can be ensured, and receiving performance of a receiving end can be ensured. It can be learned that the method provided in this embodiment of this application can be used by various types of UEs with different capabilities to perform uplink transmission.

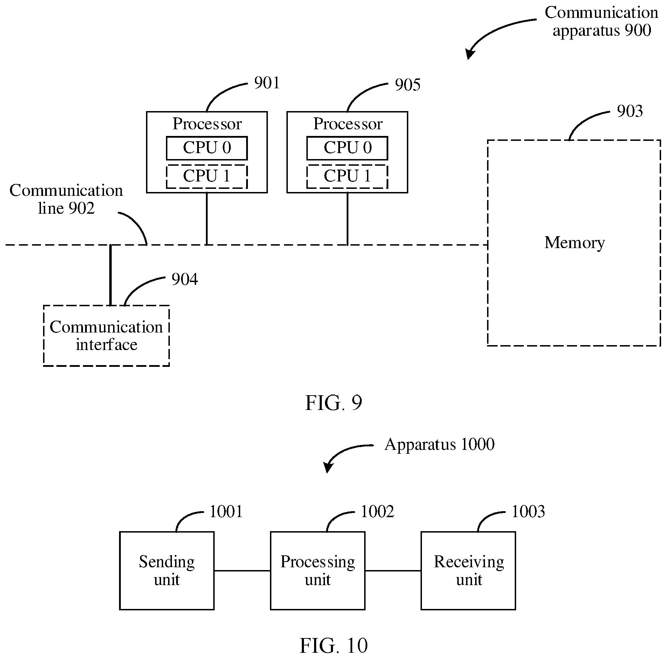

FIG. 9 is a diagram of a structure of a communication apparatus according to an embodiment of this application. The communication apparatus 900 may be the network device in the embodiment shown in any one of FIG. 6 to FIG. 8 or a circuit system of the network device, and is configured to implement the method corresponding to the network device in the foregoing method embodiments. Alternatively, the communication apparatus 900 may be a circuit system of the UE in the embodiment shown in any one of FIG. 6 to FIG. 8, and is configured to implement the method corresponding to the UE in the foregoing method embodiments. For specific functions, refer to descriptions of the foregoing method embodiments. For example, a circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. Because the memory 903, the communication line 902, and the communication interface 904 are all optional, the memory 903, the communication line 902, and the communication interface 904 are all represented by dashed lines in FIG. 9.

Optionally, the communication apparatus 900 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 900 by using an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 901 may include a general-purpose central processing unit (central processing unit, CPU), a microprocessor, an application-specific integrated circuit (application-specific integrated circuit, ASIC), or one or more integrated circuits for controlling program execution for the solutions of this application.

The communication line 902 may include a path through which information transmission is performed between the foregoing components.

The communication interface 904 uses any transceiver-type apparatus, to communicate with another device or a communication network such as the Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or other optical disc storage, optical disk storage (including a compact disc, a laser disc, an optical disc, a digital versatile disc, a Blu-ray disc, and the like), a magnetic disk storage medium or another magnetic storage device, or any other medium that can be used to carry or store expected program code in an instruction form or a data structure form and that can be accessed by a computer, but is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the processor 901 controls the execution. The processor 901 is configured to execute the computer-executable instructions stored in the memory 903, to implement the steps performed by the network device in any one of the embodiments in FIG. 6 to FIG. 8, or implement the steps performed by the UE in any one of the embodiments in FIG. 6 to FIG. 8.

Optionally, the computer-executable instructions in this embodiment of this application may also be referred to as application program code. This is not specifically limited in this embodiment of this application.

During specific implementation, in an embodiment, the processor 901 may include one or more CPUs, for example, a CPU 0 and a CPU 1 in FIG. 9.

During specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of the network device or a chip of the UE, the chip includes the processor 901 (may further include a processor 905), the communication line 902, the memory 903, and the communication interface 904. Specifically, the communication interface 904 may be an input interface, a pin, a circuit, or the like. The memory 903 may be a register, a cache, or the like. The processor 901 and the processor 905 may each be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on each corresponding function, FIG. 10 is a diagram of an apparatus. The apparatus 1000 may be the network device or the UE in the foregoing method embodiments, or may be a chip in the network device or a chip in the UE. The apparatus 1000 includes a sending unit 1001, a processing unit 1002, and a receiving unit 1003.

It should be understood that the apparatus 1000 may be configured to implement the steps performed by the network device or the UE in the communication method in embodiments of this application. For related features, refer to the embodiments shown in FIG. 6 to FIG. 8. Details are not described herein again.

Optionally, functions/implementation processes of the sending unit 1001, the receiving unit 1003, and the processing unit 1002 in FIG. 10 may be implemented by the processor 901 in FIG. 9 by invoking the computer-executable instructions stored in the memory 903. Alternatively, a function/an implementation process of the processing unit 1002 in FIG. 10 may be implemented by the processor 901 in FIG. 9 by invoking the computer-executable instructions stored in the memory 903, and functions/implementation processes of the sending unit 1001 and the receiving unit 1003 in FIG. 10 may be implemented by the communication interface 904 in FIG. 9.

Optionally, when the apparatus 1000 is a chip or a circuit, functions/implementation processes of the sending unit 1001 and the receiving unit 1003 may be further implemented by using a pin, a circuit, or the like.

This application further provides a computer-readable storage medium. The computer-readable storage medium stores a computer program or instructions, and when the computer program or the instructions are run, the method performed by the network device or the UE in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the network device or the UE in any one of the foregoing method embodiments.

An embodiment of this application further provides a communication apparatus, including a processor and an interface. The processor is configured to perform the method performed by the network device or the UE in any one of the foregoing method embodiments.

All or a part of the foregoing embodiments may be implemented by using software, hardware, firmware, or any combination thereof. When the software is used to implement the foregoing embodiments, all or a part of the foregoing embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state disk, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware part, or a design of any combination of the foregoing devices. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor may read information from the storage medium and write information to the storage medium. Alternatively, the storage medium may be integrated into a processor. The processor and the storage medium may be disposed in an ASIC, and the ASIC may be disposed in a terminal device. Alternatively, the processor and the storage medium may be disposed in different parts of a terminal device.

The computer program instructions may alternatively be loaded onto a computer or another programmable data processing device, so that a series of operations and steps are performed on the computer or another programmable device, to generate computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or a logical conflict occurs, terms and/or descriptions in different embodiments are consistent and may be referenced to each other. Technical features in different embodiments may be combined to form a new embodiment based on an internal logical relationship of the technical features.

It may be understood that in embodiments of this application, the terminal device and/or the network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A communication method, applied to a network device, wherein the method comprises:
receiving first information from a terminal device, wherein the first information indicates a transmission capability of the terminal device;
determining, based on the first information, scheduling information supported by the terminal device, wherein the scheduling information comprises a maximum quantity of data blocks and/or a maximum quantity of bits that can be transmitted in a single time domain unit; and
scheduling the terminal device based on the scheduling information.

2. The method according to claim 1, wherein the terminal device accesses the network device via a non-terrestrial network device, or the network device is a non-terrestrial network device.

3. The method according to claim 1 or 2, wherein
the first information comprises equivalent isotropic radiated power EIRP of the terminal device; or
the first information comprises maximum transmit power information and/or transmit antenna gain information of the terminal device; or
the first information comprises first capability level information, wherein the first capability level information indicates a capability level to which a transmit capability of the terminal device belongs; or
the first information comprises type information of the terminal device.

4. The method according to claim 3, wherein
the first information is comprised in a radio resource control RRC message; or
the first information is comprised in a media access control control element MAC CE; or
the first information is comprised in a third message Msg3 in a random access process.

5. The method according to claim 4, wherein the RRC message is used to carry capability information of the terminal device.

6. The method according to any one of claims 1 to 5, wherein the scheduling information comprises uplink scheduling information; and
the determining, based on the first information, scheduling information supported by the terminal device comprises:
determining first received signal strength based on the first information, wherein the first received signal strength is received signal strength of the network device for information from the terminal device;
determining a first modulation and coding scheme MCS based on the first received signal strength; and
determining the uplink scheduling information according to the first MCS, wherein
the uplink scheduling information comprises a maximum quantity of data blocks and/or a maximum quantity of bits that can be transmitted in an uplink in a single time domain unit.

7. The method according to any one of claims 1 to 6, wherein
the first information further comprises receive antenna gain information and/or received noise information of the terminal device; or
the first information further comprises second capability level information, wherein the second capability level information indicates a capability level to which a receiving capability of the terminal device belongs.

8. The method according to claim 7, wherein the scheduling information comprises downlink scheduling information; and
the determining, based on the first information, scheduling information supported by the terminal device comprises:
determining second received signal strength based on the first information, wherein the second received signal strength is received signal strength of the terminal device for information from the network device;
determining a second MCS based on the second received signal strength; and
determining the downlink scheduling information according to the second MCS, wherein
the downlink scheduling information comprises a maximum quantity of data blocks and/or a maximum quantity of bits that can be transmitted in a downlink in a single time domain unit.

9. The method according to claim 1, wherein
the first information is information corresponding to a terminal device of a first type, wherein a transmission capability of the terminal device of the first type is a first transmission capability.

10. The method according to claim 9, wherein the first information is a random access preamble.

11. A communication method, applied to a terminal device, wherein the method comprises:
determining a transmission capability of the terminal device; and
sending first information to a network device, wherein the first information indicates the transmission capability of the terminal device.

12. The method according to claim 11, wherein the terminal device accesses the network device via a non-terrestrial network device, or the terminal device is a non-terrestrial network device.

13. The method according to claim 11 or 12, wherein
the first information comprises EIRP of the terminal device; or
the first information comprises maximum transmit power information and/or transmit antenna gain information of the terminal device; or
the first information comprises first capability level information, wherein the first capability level information indicates a capability level to which a transmit capability of the terminal device belongs; or
the first information comprises type information of the terminal device.

14. The method according to claim 13, wherein
the first information is comprised in an RRC message; or
the first information is comprised in a MAC CE; or
the first information is comprised in a third message Msg3 in a random access process.

15. The method according to claim 14, wherein the RRC message is a message used to carry capability information of the terminal device.

16. The method according to any one of claims 11 to 15, wherein
the first information further comprises receive antenna gain information and/or received noise information of the terminal device; or
the first information further comprises second capability level information, wherein the second capability level information indicates a capability level to which a receiving capability of the terminal device belongs.

17. The method according to claim 11, wherein
the first information is information corresponding to a terminal device of a first type, wherein a transmission capability of the terminal device of the first type is a first transmission capability.

18. The method according to claim 17, wherein the first information is a random access preamble.

19. A communication method, applied to a network device, wherein the method comprises:
receiving second information from a terminal device, wherein transmit power of the second information is predetermined transmit power;
determining, based on the second information, uplink scheduling information supported by the terminal device, wherein the uplink scheduling information comprises a maximum quantity of data blocks and/or a maximum quantity of bits that can be transmitted in an uplink in a single time domain unit; and
scheduling the terminal device based on the uplink scheduling information.

20. The method according to claim 19, wherein the predetermined transmit power is maximum transmit power of the terminal device.

21. The method according to claim 19 or 20, wherein the terminal device accesses the network device via a non-terrestrial network device, or the network device is a non-terrestrial network device.

22. The method according to any one of claims 19 to 21, wherein the second information is a random access preamble, a Msg3 in a random access process, a fifth message Msg5 in a random access process, or information carried on a physical uplink shared channel PUSCH.

23. The method according to any one of claims 19 to 22, wherein the method further comprises:
sending third information, wherein the third information indicates the terminal device to send the second information based on the predetermined transmit power.

24. The method according to claim 23, wherein the third information is system information, a random access response message, or information carried on a physical downlink control channel PDCCH.

25. The method according to any one of claims 19 to 24, wherein the determining, based on the second information, uplink scheduling information supported by the terminal device comprises:
determining received signal strength of the network device for the second information;
determining an MCS based on the received signal strength, and determining the uplink scheduling information according to the MCS.

26. A communication method, applied to a terminal device, wherein the method comprises:
sending second information to a network device at predetermined transmit power, wherein the second information is used to determine uplink scheduling information supported by the terminal device, wherein the uplink scheduling information comprises a maximum quantity of data blocks and/or a maximum quantity of bits that can be transmitted in an uplink in a single time domain unit.

27. The method according to claim 26, wherein the predetermined transmit power is maximum transmit power of the terminal device.

28. The method according to claim 26 or 27, wherein the terminal device accesses the network device via a non-terrestrial network device, or the terminal device is a non-terrestrial network device.

29. The method according to any one of claims 26 to 28, wherein the second information is a random access preamble, a Msg3 in a random access process, a Msg5 in a random access process, or information carried on a PUSCH.

30. The method according to any one of claims 26 to 29, wherein the method further comprises:
receiving third information from the network device, wherein the third information indicates the terminal device to send the second information based on the predetermined transmit power.

31. The method according to claim 30, wherein the third information is system information, a random access response message, or information carried on a PDCCH.

32. A communication apparatus, comprising a processor and a memory, wherein the memory is coupled to the processor, and the processor is configured to perform the method according to any one of claims 1 to 10 or the method according to any one of claims 19 to 25.

33. A communication apparatus, comprising a processor and a memory, wherein the memory is coupled to the processor, and the processor is configured to perform the method according to any one of claims 11 to 18 or the method according to any one of claims 26 to 31.

34. A communication apparatus, wherein the communication apparatus comprises a processing unit and a transceiver unit, and the processing unit is coupled to the transceiver unit, to perform the method according to any one of claims 1 to 10 or the method according to any one of claims 19 to 25.

35. A communication apparatus, wherein the communication apparatus comprises a processing unit and a transceiver unit, and the processing unit is coupled to the transceiver unit, to perform the method according to any one of claims 11 to 18 or the method according to any one of claims 26 to 31.

36. A computer-readable storage medium, wherein the computer-readable storage medium is configured to store a computer program, and when the computer program is run on a computer, the computer is enabled to perform the method according to any one of claims 1 to 10, the method according to any one of claims 11 to 18, the method according to any one of claims 19 to 25, or the method according to any one of claims 26 to 31.

37. A chip system, wherein the chip system comprises:
a processor and an interface, wherein the processor is configured to invoke instructions from the interface and run the instructions, and when the processor executes the instructions, the method according to any one of claims 1 to 10, the method according to any one of claims 11 to 18, the method according to any one of claims 19 to 25, or the method according to any one of claims 26 to 31 is implemented.

38. A computer program product, wherein the computer program product comprises a computer program, and when the computer program is run on a computer, the computer is enabled to perform the method according to any one of claims 1 to 10, the method according to any one of claims 11 to 18, the method according to any one of claims 19 to 25, or the method according to any one of claims 26 to 31.
